# EUROPÄISCHE PATENTSCHRIFT

(11) **EP 0 556 817 B1**
(45) Veröffentlichungstag und Bekanntmachung des Hinweises auf die Patenterteilung: **08.01.1997**
(21) Anmeldenummer: 93102541.5
(22) Anmeldetag: 18.02.1993
(51) Int. Cl.: B25J 9/10, B25J 17/02, F16H 25/22

(54) **Armroboter**
Robotised arm
Bras robotisé

(30) Priorität: 18.02.1992 CH 475/92; 30.07.1992 CH 2425/92
(43) Veröffentlichungstag der Anmeldung: 25.08.1993
(73) Patentinhaber: Dudzik, Krzysztof, CH-8755 Ennenda (CH)
(72) Erfinder: Dudzik, Krzysztof, CH-8755 Ennenda (CH)
(74) Vertreter: Zink-Wild, Markus Peter

(56) Entgegenhaltungen:
- EP-A- 0 292 056
- DE-A- 2 339 324
- FR-A- 1 301 396
- FR-A- 2 040 142
- GB-A- 932 721
- US-A- 2 890 594
- US-A- 4 738 415

## Beschreibung

Die vorliegende Erfindung betrifft Armroboter, insbesondere zum Abnehmen von Werkstücken, beispielsweise Spritzgussstücken.

Im Stand der Technik sind die verschiedensten Arten von Armrobotern bekannt.

Es gibt nur einige wenige Roboter mit mechanischer Zwangssteuerung, beispielsweise mit Zahnrädern oder mit Zahnriemen. Diese Roboter haben den Nachteil, dass sie anfällig gegenüber Störungen sind und nicht immer präzise arbeiten. Hydraulisch gesteuerte Roboter arbeiten langsam und nicht immer präzise.

Ein zwangsgesteuerter Armroboter ist aus EP 0 292 056 bekannt; er wird lateral geführt.

Ein axial geführter zwangsgesteuerter Armroboter mit Rollenlagern ist nicht bekannt.

Es ist ein Ziel der vorliegenden Erfindung, einen neuen Roboter mit Zwangssteuerung mit Rollenlagern zur Verfügung zu stellen, welcher zuverlässig, präzise und schnell arbeitet.

Die Erfindung betrifft einen Armroboter, insbesondere zum Abnehmen von Werkstücken, beispielsweise Spritzgussstücken, welcher
einen Arm 1 und einen mit dem Arm 1 verbundenen Greifer 2 aufweist,
der Arm 1 mit wenigstens einer Rollenlagermutter verbunden ist,
sich innerhalb der Rollenlagermutter entlang deren Längsachse eine Rollenspindel 30 befindet,
das eine Ende der Spindel 30 mit einem Befestigungsklotz 6 verbunden ist,
der Befestigungsklotz 6 mit einer Festplatte 7 - auch Abstützplatte genannt - verbunden ist,
das andere Ende der Spindel 30 von zwei bis sechs aufgesetzte, und/oder eingelassene, und/oder flache Züge 31 aufweist,
die Spindel 30 mit gelagerten Rollen 32 in Kontakt steht,
die gelagerten Rollen 32 in Führungslager 33 oder direkt in ein Gehäuse 35 eingebaut sind,
die Führungslager 33 in Büchsen 34 oder Nadelkränzen 40 untergebracht sind,
die Büchsen 34 bzw. die Nadelkränze 40 in ein Gehäuse 35 eingebaut sind,
   dadurch gekennzeichnet, dass
das Führungslager 33 über eine Tellerfeder 36 radial vorgespannt ist,
die Tellerfeder 36 über einen Sicherungsring 37 gesichert ist,
sich auf beiden Innenseiten der gelagerten Rollen 32 je eine Distanzscheibe 38 befindet,
die gelagerten Rollen 32 zusammen mit der Distanzscheibe 38 mit einem Zapfen 39 verbunden sind,
die Rollenlagermutter mit einem Lagerring 12 verbunden ist,
sich auf dem Lagerring 12 ein inneres axiales Lager 13 und ein äusseres axiales Lager 14 befinden,
sich zwischen den genannten Lagern 13 und 14 ein radiales Lager 15 befindet,
alle genannten Lager 13, 14 und 15 auf ein Mitnehmerrohr 16 aufgebaut sind,
die genannten axialen Lager 13 und 14 mit einer Mutter 17 vorgespannt sind,
das Mitnehmerrohr 16 mit einem Befestigungsklotz 18 verbunden ist, und
der Befestigungsklotz 18 mit einer beweglichen Platte 19 verbunden ist.

Bevorzugte Ausführungsformen sind in den abhängigen Ansprüchen definiert.

Im folgenden Teil werden bevorzugte Ausführungsformen unter Bezugnahme auf die Figuren beschrieben.

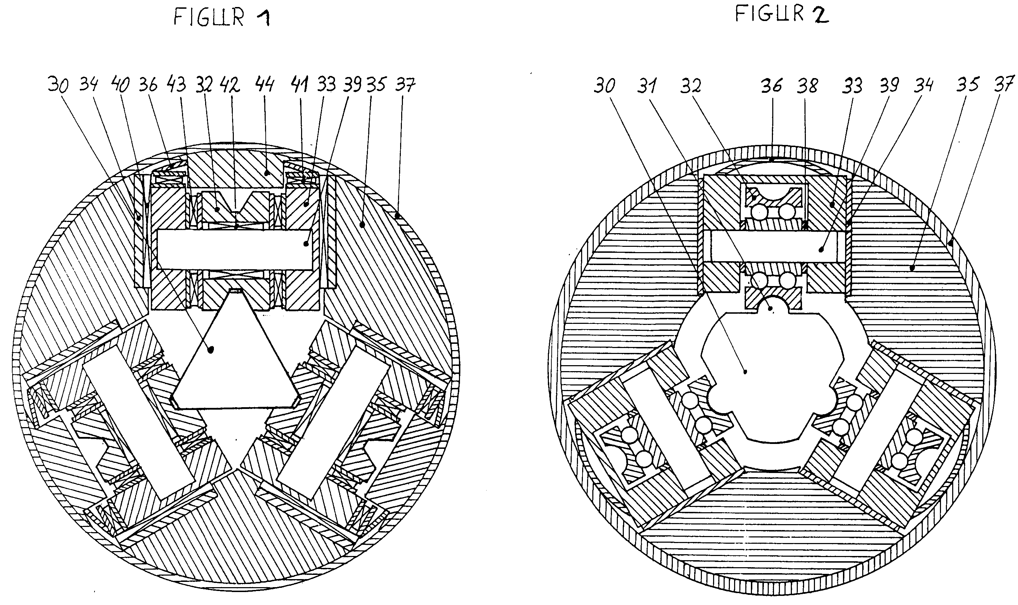

Die Figuren 1 und 2 zeigen Querschnitte durch mögliche Ausführungsformen der erfindungsgemässen Vorrichtung.

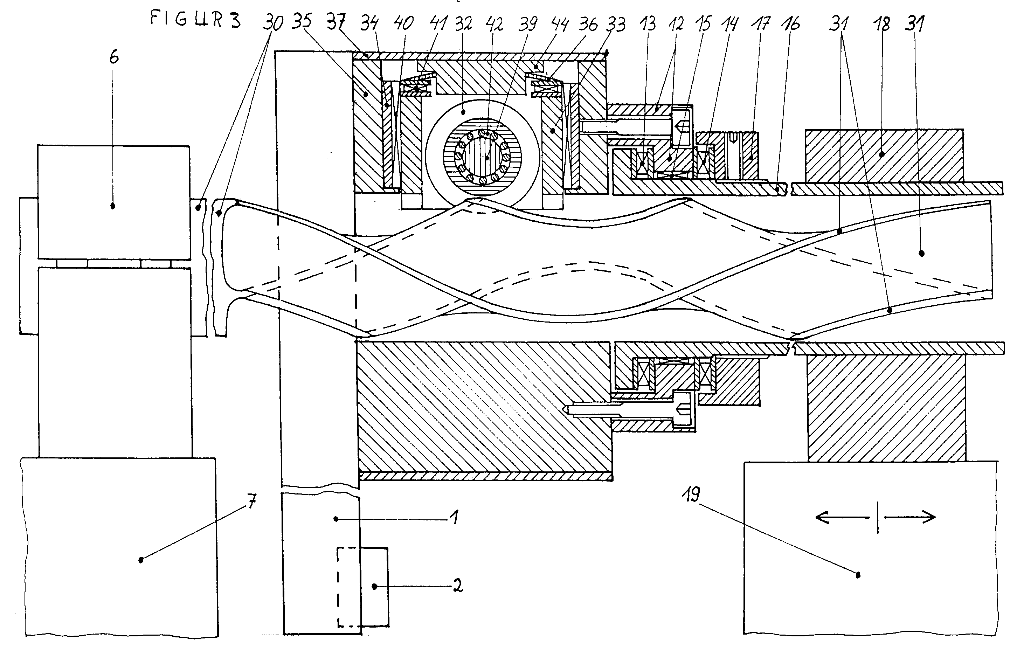

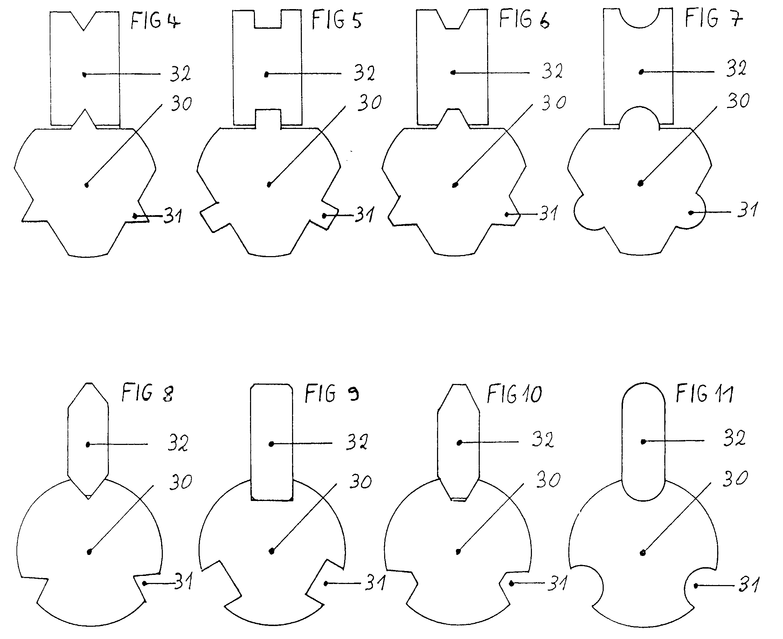

Figur 3 zeigt einen Querschnitt entlang der Längsachse durch eine mögliche Form der erfindungsgemässen Vorrichtung und mögliche Anordnungen der aufgesetzten und der flachen Züge 31 auf der Spindel 30.

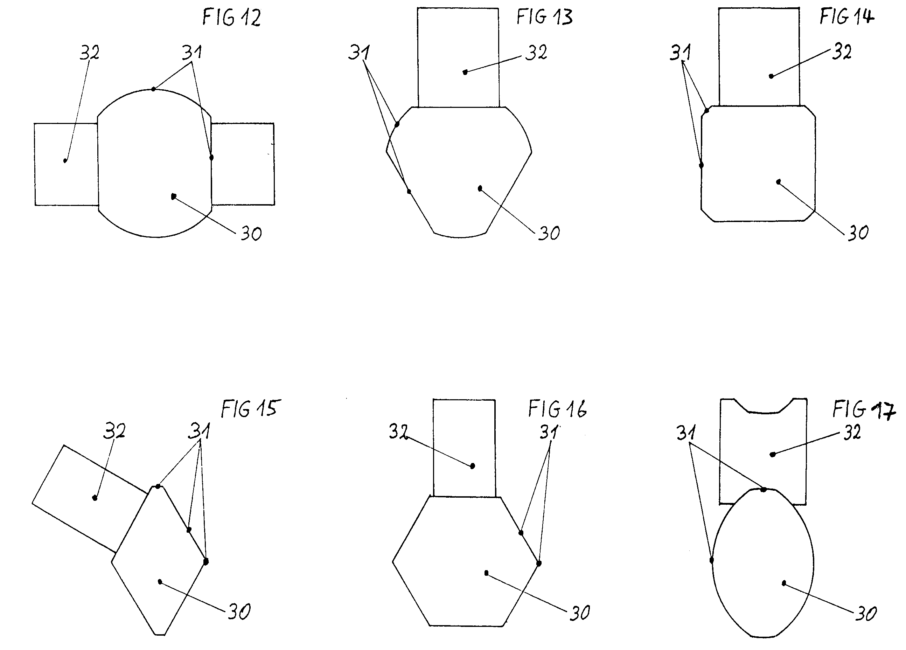

Die Figuren 4 bis 7 zeigen mögliche Querschnitte durch die Spindel 30 mit aufgesetzten Zügen 31.

Die Figuren 8 bis 11 zeigen Querschnitte durch die Spindel 30 mit eingelassenen Zügen 31.

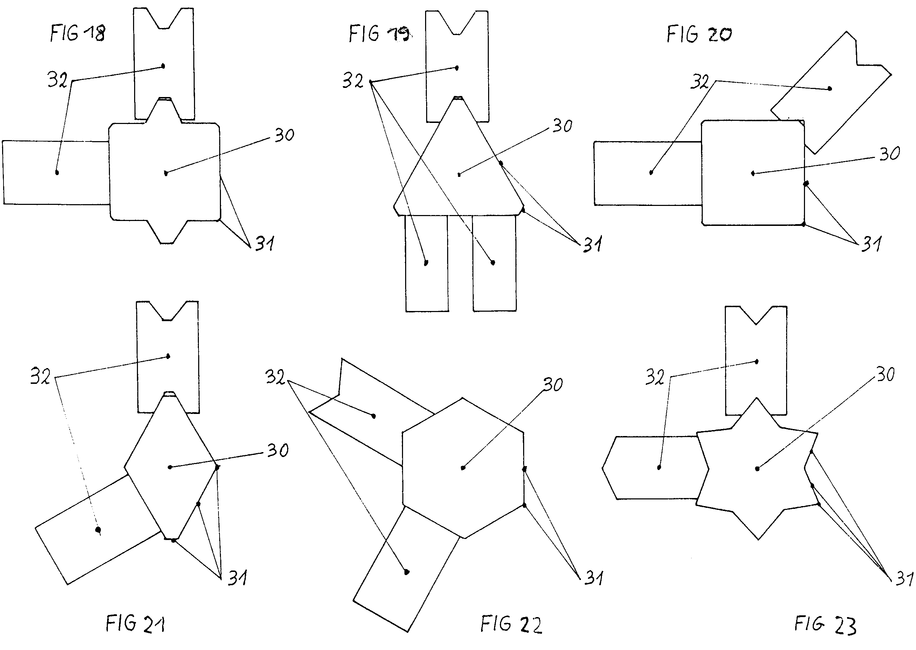

Die Figuren 12 bis 17 zeigen Querschnitte durch die Spindel 30 mit flachen Zügen 31.

Die Figuren 18 bis 23 zeigen Querschnitte durch die Spindel 30, wobei aufgesetzte, eingelassene und flache Züge 31 kombiniert sind.

Arm 1 und Greifer 2 sind im Stand der Technik bekannt und können je nach Bedarf ausgestaltet sein.

Beim erfindungsgemässen Armroboter können um die Rollenspindel 30 mehrere Rollenlagermuttern hintereinander angeordnet sein.

In dieser Tandem-Anordnung von Rollenlagermuttern sind die einzelnen Rollenlagermuttern miteinander verbunden, beispielsweise verschraubt.

Durch verschiedene Ganghöhen, auch Neigungswinkel genannt, der Züge 31 können verschiedene Auslenkungen des Armes 1 bei Einwirkung von entsprechenden Zug- und Stosskräften erhalten werden.

Die Züge 31 sind entweder flach oder auf die Spindel 30 aufgesetzt oder in die Spindel 30 eingelassen, wobei Kombinationen der flachen, aufgesetzten und eingelassenen Formen möglich sind.

Die Züge 31 können auch andere geometrische Formen, als in den Figuren dargestellt, haben.

Normalerweise sind beim erfindungsgemässen Armroboter die Züge 31 derart geneigt, dass sich bei Einwirkung von Zug- und Stosskräften über eine erste Distanz von 60 mm eine Auslenkung des Armes 1 von 90° ergibt. Daran kann sich eine Kurve mit einem Radius von 40 bis 120 mm anschliessen, um den Arm 1 weiter auszulenken.

In dieser Stellung kann die Vorrichtung problemlos gereinigt werden, in welche der erfindungsgemässe Armroboter integriert ist.

Anschliessend können die Züge 31 so geneigt sein, dass sich der Arm 1 entweder noch weiter auslenkt oder wieder zurück geht.

Beim Durchlaufen von verschiedenen Ganghohen muss das Führungslager 33 mittels den Rollen 32 um die eigene Achse drehbar sein.

Die flachen, aufgesetzten und eingelassenen Züge 31 können kombiniert werden.

Alle vorhandenen Nadelkränze 40, 41, 42 und 43 erhöhen die Stabilität der erfindungsgemässen Vorrichtung.

Die erfindungsgemässe Vorrichtung ist vorzugsweise aus rostfreiem Stahl gefertigt, beispielsweise Chrom/Nickelstahl.

## Patentansprüche

1. Armroboter, insbesondere zum Abnehmen von Werkstücken, beispielsweise Spritzgussstücken, welcher
einen Arm (1) und einen mit dem Arm (1) verbundenen Greifer (2) aufweist,
der Arm (1) mit wenigstens einer Rollenlagermutter verbunden ist,
sich innerhalb der Rollenlagermutter entlang deren Längsachse eine Rollenspindel (30) befindet,
das eine Ende der Spindel (30) mit einem Befestigungsklotz (6) verbunden ist,
der Befestigungsklotz (6) mit einer Festplatte (7) - auch Abstützplatte genannt - verbunden ist,
das andere Ende der Spindel (30) von zwei bis sechs aufgesetzte, und/oder eingelassene, und/oder flache Züge (31) aufweist,
die Spindel (30) mit gelagerten Rollen (32) in Kontakt steht,
die gelagerten Rollen (32) in Führungslager (33) oder direkt in ein Gehäuse (35) eingebaut sind,
die Führungslager (33) in Büchsen (34) oder in Nadelkränzen (40) untergebracht sind,
die Büchsen (34) bzw. die Nadelkränze (40) in ein Gehäuse (35) eingebaut sind,
dadurch gekennzeichnet, daß
das Führungslager (33) über eine Tellerfeder (36) radial vorgespannt ist,
die Tellerfeder (36) über einen Sicherungsring (37) gesichert ist,
sich auf beiden Innenseiten der gelagerten Rollen (32) je eine Distanzscheibe (38) befindet,
die gelagerten Rollen (32) zusammen mit der Distanzscheibe (38) mit einem Zapfen (39) verbunden sind,
die Rollenlagermutter mit einem Lagerring (12) verbunden ist,
sich auf dem Lagerring (12) ein inneres axiales Lager (13) und ein äusseres axiales Lager (14) befinden,
sich zwischen den genannten Lagern (13) und (14) ein radiales Lager (15) befindet,
alle genannten Lager (13), (14) und (15) auf ein Mitnehmerrohr (16) aufgebaut sind,
die genannten axialen Lager (13) und (14) mit einer Mutter (17) vorgespannt sind,
das Mitnehmerrohr (16) mit einem Befestigungsklotz (18) verbunden ist, und
der Befestigungsklotz (18) mit einer beweglichen Platte (19) verbunden ist.

2. Armroboter nach Anspruch 1, dadurch gekennzeichnet, dass die Züge (31) im Querschnitt eine halbkreisförmige, eine dreieckige, eine quadratische, eine trapezförmige oder eine rechteckige Form aufweisen.

3. Armroboter nach einem der Ansprüche 1 bis 2, dadurch gekennzeichnet, dass die gelagerten Rollen (32) Rollenlager sind.

4. Armroboter nach einem der Ansprüche 1 bis 3, dadurch gekennzeichnet, dass sich zwischen dem Führungslager (33) und der Tellerfeder (36) zusätzlich noch ein axialer Nadelkranz (41) befindet.

5. Armroboter nach einem der Ansprüche 1 bis 4, dadurch gekennzeichnet, dass die gelagerten Rollen (32) von innen mit Nadelkränzen (42) und von beiden Seiten her mit axialen Nadelkränzen (43) gelagert sind.

6. Armroboter nach einem der Ansprüche 1 bis 5, dadurch gekennzeichnet, dass sich zwischen Tellerfeder (36) und dem Sicherungsring (37) ein Deckel (44) befindet, insbesondere ein Deckel (44) mit einem pilzförmigen Querschnitt.

7. Armroboter nach einem der Ansprüche 1 bis 6, dadurch gekennzeichnet, dass die Züge (31) um die Spindel (30) eine oder mehrere Ganghöhe(n) aufweisen, um eine oder mehrere, vorausbestimmte Auslenkung(en) des Armes (1) zu ermöglichen.

8. Armroboter nach einem der Ansprüche 1 bis 7, dadurch gekennzeichnet, dass miteinander verbundene Teile verschraubt sind.

9. Armroboter nach einem der Ansprüche 1 bis 8, dadurch gekennzeichnet, dass sich bei Einwirkung von Zug- und Stosskräften auf die Platte (19) die Rollenlagermutter um die Spindel (30) dreht.

## Claims

1. An arm robot apparatus, specifically for the removal of workpieces, such as injection molded articles, comprising
an arm (1) and a gripping device (2) mounted to said arm;
said arm (1) is mounted to at least one roller bearing nut;
a roller spindle (30) is located inside said roller bearing nut extending in the longitudinal direction thereof;
which roller spindle (30) has a first end and a second end and the first end is mounted to a mounting block (6);
which mounting block (6) is mounted to a supporting plate (7);
which second end of the roller spindle (30) includes two to six ball races (31) set thereupon, and/or set thereinto and/or are arranged planarly;
the spindle (30) contacts supported roller bodies (32) which are mounted in guiding bearings (33) or directly into a housing (35), which guiding bearings (33) are set in bushings (34) or in needle roller bearings (40), which bushings (34) and which needle roller bearings (40) are mounted in a housing (35),
characterized in that
the guiding bearings (33) are pre-tensioned radially by a cup spring (36) which is arrested by an arresting ring (37);
in which a spacer disc (38) is located at two inner sides of the supported roller bodies (32);
the supported roller bodies (32) are connected together with the spacer disc (38) to a peg (39);
in which the roller bearing nut is mounted to a bearing ring (12) on which an inner axial bearing (13) and an outer axial bearing (14) are located, between which bearings (13, 14) a radial bearing (15) is located which bearings (13, 14, 15) are mounted on a driving tube (16) and which axial bearings (13, 14) are pre-tensioned by a nut (17);
which driving tube (16) is mounted to a mounting block (18) which in turn is mounted to a moveable plate (19).

2. The arm robot apparatus of claim 1, in which said ball races (31) have a semi-circular, triangular, quadratic, trapezoidal or square cross section.

3. The arm robot apparatus of one of claims 1 to 2, in which said supported rollers (32) are roller bearings.

4. The arm robot apparatus of one of claims 1 to 3, comprising further an axial needle bearing ring (41) located between said guiding bearing (33) and said cup spring (36).

5. The arm robot apparatus of one of claim 1 to 4, in which the supported roller bodies (32) are supported from the inside by needle bearings (42) and from both sides by axial needle bearings (43).

6. The arm robot apparatus of one of claims 1 to 5, comprising a cover (44) located between said cup spring (36) and said arresting ring (37), specifically a cover (44) having a mushroom like cross-section.

7. The arm robot apparatus of one of claims 1 to 6, in which the ball races (31) extending around the roller spindle (30) have one or a plurality of pitches whereby one or a plurality of predetermined deflections of the arm (1) are made possible.

8. The arm robot apparatus of one of claims 1 to 7, in which parts mounted to each other are screwed to each other.

9. The arm robot apparatus of one of claims 1 to 8, in which upon an acting of pulling and pushing forces onto said moveable plate (19) said roller bearing nut rotates around said spindle (30).

## Revendications

1. Robot à bras, en particulier pour enlever des pièces, par exemple des pièces moulées par injection,
- présentant un bras (1) et un préhenseur (2) raccordé au bras (1), et
- dans lequel le bras (1) est raccordé à au moins un dispositif de palier à roulement,
- un arbre à roulement (30) est positionné à l'intérieur du dispositif de palier à roulement, la long de son axe longitudinal,
- une extrémité de l'arbre (30) est raccordée à une cale de serrage (6),
- la cale de serrage (6) est raccordée à une plaque fixe (7), également appelée plaque d'appui,
- l'autre extrémité de l'arbre (30) présente de deux à six éléments d'entraînement (31) rapportés et/ou encastrés et/ou du type plat,
- l'arbre (30) est en contact avec des roulements (32),
- les roulements (32) sont installés dans des paliers-guides (33) ou directement dans un bâti (35),
- les paliers-guides (33) sont logés dans des bagues (34) ou dans des couronnes à aiguilles (40),
- les bagues (34) voire les couronnes à aiguilles (40) sont installées dans un bâti (35),
caractérisé en ce que :
- le palier-guide (33) est mis en précontrainte radialement par l'intermédiaire d'une rondelle-ressort (36),
- la rondelle-ressort (36) est calée par un circlip (37),
- un disque d'écartement (38) est positionné contre chacune des deux faces internes des roulements (32),
- les roulements (32) ainsi que le disque d'écartement (38) sont reliés à un pivot (39),
- le dispositif de palier à roulement est raccordé à une bague de palier (12),
- un roulement axial intérieur (13) et un roulement axial extérieur (14) sont disposés sur la bague de palier (12),
- un roulement radial (15) est positionné entre les roulements (13) et (14) précités,
- tous les roulements précités (13), (14) et (15) sont montés sur une broche d'entraînement tubulaire (16),
- les roulements axiaux précités (13) et (14) sont mis en précontrainte par un écrou (17),
- la broche d'entraînement tubulaire (16) est raccordée à une cela de serrage (18), et
- le cale de serrage (18) est raccordée à une plaque mobile (19).

2. Robot à bras selon la revendication 1, caractérisé en ce que les éléments d'entraînement (31) présentent, en coupe transversale, une forme semi-circulaire, triangulaire, carrée, trapézoïdale ou rectangulaire.

3. Robot à bras selon l'une des revendications 1 à 2, caractérisé en ce que les roulements (32) sont des roulements à rouleaux.

4. Robot à bras selon l'une des revendications 1 à 3, caractérisé en ce qu'une couronne à aiguilles axiale (41) est positionnée entre le palier-guide (33) et la rondelle-ressort (36).

5. Robot à bras selon l'une des revendications 1 à 4, caractérisé en ce que les roulements (32) sont supportés, de l'intérieur, avec des couronnes à aiguilles (42), et sur les deux côtés, avec des couronnes à aiguilles axiales (43).

6. Robot à bras selon l'une des revendications 1 à 5, caractérisé en ce qu'un couvercle (44), en particulier un couvercle à section transversale en champignon, est positionné entre la rondelle-ressort (36) et le circlip (37).

7. Robot à bras selon l'une des revendications 1 à 6, caractérisé en ce que les éléments d'entraînement (31) répartis autour de l'arbre (30) présentent un ou plusieurs pas d'espacement, pour permettre un ou plusieurs déport(s) du bras (1) défini(s) au préalable.

8. Robot à bras selon l'une des revendications 1 à 7, caractérisé en ce que des éléments raccordés entre eux sont vissés.

9. Robot à bras selon l'une des revendications 1 à 8, caractérisé en ce que le dispositif de palier à roulement tourne autour de l'arbre (30) sous l'influence d'efforts de traction et de poussée exercés sur la plaque (19).
